# EUROPEAN PATENT APPLICATION

(11) **EP 1 768 226 A1**
(43) Date of publication of application: **28.03.2007**
(21) Application number: 05748925.4
(22) Date of filing: 08.06.2005
(51) Int. Cl.: H02K 1/02, B62D 5/04, H02K 1/14, H02K 21/16

(54) **ELECTRIC MOTOR AND ELECTRIC POWER STEERING DEVICE**

(30) Priority: 09.06.2004 JP 2004171703
(71) Applicant: Koyo Seiko Co., Ltd., Osaka-shi, Osaka 542-0081 (JP)
(72) Inventor: MATSUBARA, Ken, c/o Jtekt Corporation, Osaka-shi, Osaka 5428502 (JP)
(74) Representative: Steil, Christian
(86) International application number: PCT/JP2005/010456
(87) International publication number: WO 2005/122361

(57) **Abstract**

An electric motor (9) has a core (22) formed by a magnetic material having a hysteresis proportion not greater than 67% against the entire iron loss W expressed as a total of a hysteresis loss Wh and an eddy current loss We which has been measured under conditions of a frequency 50 Hz and a magnetic flux density 1.5 T. Thus, when the electric motor (9) is built in a power steering apparatus (1), it is possible to reduce the loss torque of the electric motor (9), increase torque, and prevent increase of cogging torque.

## Description

### Technical Field

The present invention relates to an electric motor and an electric power steering apparatus for performing steering assist by rotating the electric motor in response to an input from a steering member (a steering wheel).

### Background Art

An example of power steering apparatus for automobiles, an electric power steering apparatus (EPS) utilizing a rotating force of an electric motor is used. For example, in a column-type EPS, an input from a steering member by a steering operation is detected by a steering angle sensor to rotate an electric motor, the rotation of the electric motor is decelerated by a reduction gear, and an output thereof is amplified and is then applied to a column, thereby torque-assisting the steering operation.

As an electric motor 9 for the electric power steering apparatus, a brushless motor, comprising a rotor magnet 14 having magnets arranged therein in a shape of a cylinder and a stator 15 surrounding an outer periphery of the rotor magnet 14, the stator 15 comprising a core 22 having a core body 16 in a shape of a cylinder arranged concentrically with the rotor magnet 14 and a plurality of stator cores 21 extended radially inward from an inner peripheral surface 17 of the core body 16 and radially disposed around the rotor magnet 14 such that front ends 18 thereof are opposed to an outer peripheral surface 19 of the rotor magnet 14 with a fine gap 20 provided therebetween, the core body 16 and the stator cores 21 are integrally formed of a magnetic material, and a coil 24 with which a gap 23 between the stator cores 21 in the core 22 is filled, is widely used because it does not have a brush and a rectifier so that the configuration thereof is simple and cause few faults.

The electric motor for the electric power steering apparatus is required that loss torque (static friction) is as low as possible. The reason for this is that in a case where the loss torque is high, returning action of the steering member and operation feeling at starting to turn the steering member are particularly affected. Further, it is also needed to not only reduce the loss torque but also positively raise torque generated by the electric motor.

In a general-purpose electric motor, it is known that an iron loss W in a magnetic material forming the core is reduced to reduce loss torque and raise torque (see Patent Document 1, for example). Therefore, it is examined whether the same measures are taken even in the electric motor for the electric power steering apparatus.

As the electric power steering apparatus is miniaturized, it is needed to miniaturize the electric motor for steering assist and to increase torque generated thereby. As measures taken for that, it is examined whether a teeth width Tt of each of the stator cores 21 is reduced in order to make the gap 23 between stator cores 21 as wide as possible whereby to ensure a winding space in the limited volume of the core 22.

Patent Document 1: Japanese Unexamined Patent Publication No. 2003-518903 (Claim 1, Column 0005 and Column 0009)

### Disclosure of the Invention

### Problems to be Solved by the Invention

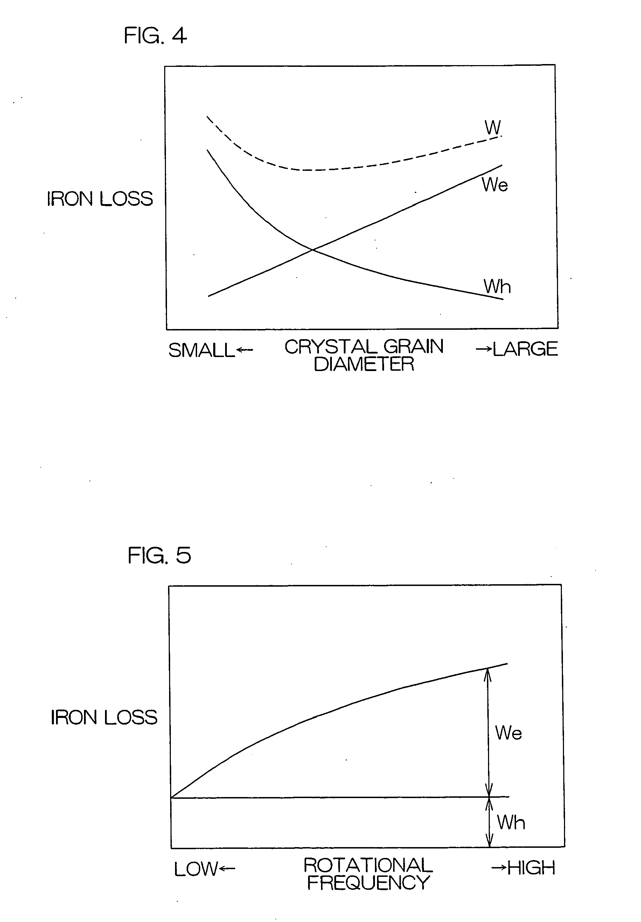

The iron loss W is represented by the sum (Wh + We) of an eddy current loss We and a hysteresis loss Wh. There is a relationship shown in Fig. 4 among the eddy current loss We, the hysteresis loss Wh, the iron loss W that is the sum of both losses, and the crystal grain diameter of the magnetic material. In a general-purpose electric motor, it is possible to efficiently reduce loss torque and increase torque by selectively using as a magnetic material forming the core 22 one having a crystal grain diameter in which the iron loss W indicated by a broken line in the figure takes a minimal value.

In an electric motor for an electric power steering apparatus, however, the same effect is not obtained even if the same magnetic material as that used for the general-purpose electric motor is used as a magnetic material for forming a core.

In order to make as wide as possible the gap 23 between stator cores 21 in the core 22 formed using such the magnetic material, the smaller the teeth width Tt of each of the stator cores 21 is, as described above, the more greatly cogging torque of the electric motor rises.

An object of the present invention is to provide an electric motor superior in the effects of reducing loss torque, raising torque, preventing cogging torque from rising and the like to those so far produced and an electric power steering apparatus comprising the electric motor.

### Means for Solving the Problems

The present invention provides an electric motor characterized by comprising a rotor and a stator, one of the rotor and the stator comprising a coil and a core, and the core is formed of a magnetic material in which a hysteresis loss Wh, which is measured under conditions of a frequency of 50 Hz and a magnetic flux density of 1.5 T, accounts for not more than 67 % of a whole of an iron loss W represented by a sum of the hysteresis loss Wh and an eddy current loss We.

It is preferable that the core is formed of a magnetic material in which a hysteresis loss Wh, which is measured under above-mentioned conditions, accounts for not more than 60 % of the whole of an iron loss W.

It is preferable that the core is formed of a magnetic material in which an iron loss W is not more than 2.3 W/kg.

It is preferable that the electric motor according to the present invention is a brushless motor comprising a rotor magnet in a shape of a cylinder and the stator surrounding an outer periphery of the.rotor magnet, the stator comprising the coil and the core integrally formed of the magnetic material, the core comprising a core body in a shape of a cylinder arranged concentrically with the rotor magnet and a plurality of stator cores extended radially inward from an inner peripheral surface of the core and radially disposed around the rotor magnet such that front ends thereof are opposed to an outer peripheral surface of the rotor magnet with a fine gap provided therebetween to form a space filled with the coil, an outer diameter of the core body is not more than ϕ 80 mm, a teeth width that is a width, in a direction perpendicular to a radial direction of the cylinder, of the stator cores are not more than 8 mm, and an open slot width that is an opening width along a circumferential direction of the cylinder between the front ends, which are opposed to the outer peripheral surface of the rotor magnet, of the adjacent stator cores are not more than 0.8 mm.

Furthermore, the present invention provides an electric power steering apparatus characterized by comprising the electric motor according to the present invention as an electric motor for performing steering assist by rotating in response to an input from a steering member.

### Effect of the Invention

In an electric motor for the electric power steering apparatus, the range of the speed of rotation in which the effect such as reducing loss torque is desired to be obtained is small even in a range of the speed of rotation in common use. For example, the speed of rotation of the electric motor at the time of normal steering is not more than several tens Hz in terms of a rotational frequency even if viscosity is considered, and is reduced to approximately 12 Hz particularly when a stationary steering is performed. Further, rotational frequencies in returning the steering wheel and starting to turn the steering member are not more than 10 Hz.

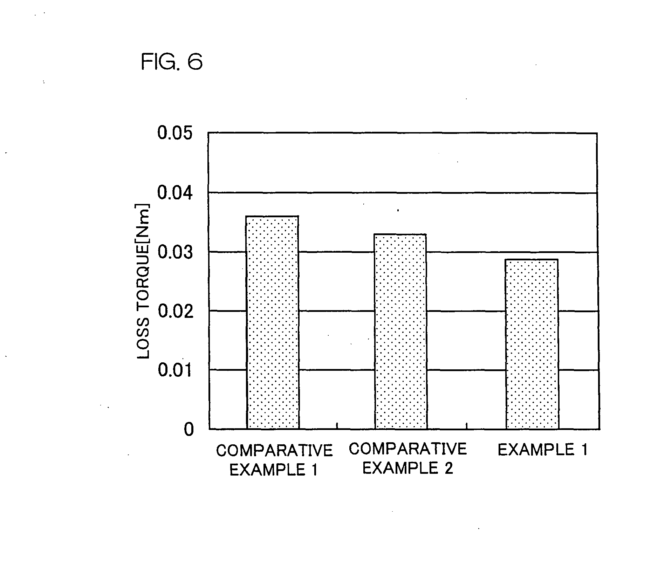

In such a low-speed rotation area, the proportion of a hysteresis loss Wh to an iron loss W is increased. That is, there is a relationship shown in Fig. 5 among an eddy current loss We, the hysteresis loss Wh, and the rotational frequency of the electric motor. The lower the rotational frequency becomes, the lower the eddy current loss We becomes. However, the hysteresis loss Wh is hardly changed. Therefore, the proportion of the hysteresis loss Wh to the iron loss W is increased. As a result, even if a magnetic material in which an iron loss W takes a minimal value in a range of the speed of rotation of a general-purpose electric motor is used as a magnetic material for forming a core, a good effect is not necessarily obtained.

On the other hand, if a core is formed using a magnetic material in which a hysteresis loss Wh, which is measured under conditions of a frequency of 50 Hz and a magnetic flux density of 1.5 T, accounts for not more than 67 % of a whole of the iron loss W represented by a sum of the hysteresis loss Wh and an eddy current loss We, the whole of the iron loss W in the magnetic material can be more significantly reduced than ever before, combined with the reduction in the eddy current loss We caused by the reduction in the rotational frequency in the low-speed rotation area.

According to the present invention, therefore, it is possible to provide an electric motor superior in the effects of reducing loss torque, raising torque, preventing cogging torque from rising and the like to those so far produced, and an electric power steering apparatus comprising the electric motor.

In a case where a core is formed of a magnetic material in which a proportion of a hysteresis loss Wh measured under above-mentioned conditions is not more than 60 %, the iron loss W in the magnetic material can be further reduced. Therefore, the effect of the present invention can be made more effective.

Furthermore, if the core is formed of a magnetic material in which an iron loss W is not more than 2.3 W/kg, the iron loss is reduced, so that the motor efficiency (output) can be improved.

The configuration of the present invention is further effective when it is applied to a brushless motor in which an outer diameter of the core body is not more than ϕ 80 mm, a teeth width that is a width, in a direction perpendicular to a radial direction of the cylinder, of each of stator cores is not more than 8 mm, and an open slot width that is an opening width along a circumferential direction of the cylinder between front ends, which are opposed to the outer peripheral surface of the rotor magnet, of the adjacent stator cores are not more than 0.8 mm.

### Brief Description of the Drawings

[Fig. 1] A block diagram for explaining an example of an embodiment of an electric power steering apparatus according to the present invention.
[Fig. 2] A cross sectional view showing a internal configuration of a brushless motor serving as an electric motor according to the present invention employed in the electric power steering apparatus. [Fig. 3] A cross-sectional view showing a internal configuration of a modified example of a brushless motor.
[Fig. 4] A graph showing a relationship among an eddy current loss We, a hysteresis loss Wh, an iron loss W that is the sum of the eddy current loss and the hysteresis loss, and a crystal grain diameter of a magnetic material.
[Fig. 5] A graph showing a relationship among an eddy current loss We, a hysteresis loss Wh, and a rotational frequency ·of an electric motor.
[Fig. 6] A graph showing results of measurement of loss torque at the time of low speed rotation in electric motors using cores fabricated in an example and comparative examples.
[Fig. 7] A graph showing results of measurement of cogging torque at the time of low speed rotation in electric motors using cores fabricated in an example and comparative examples.

### Best Mode for Carrying Out the Invention

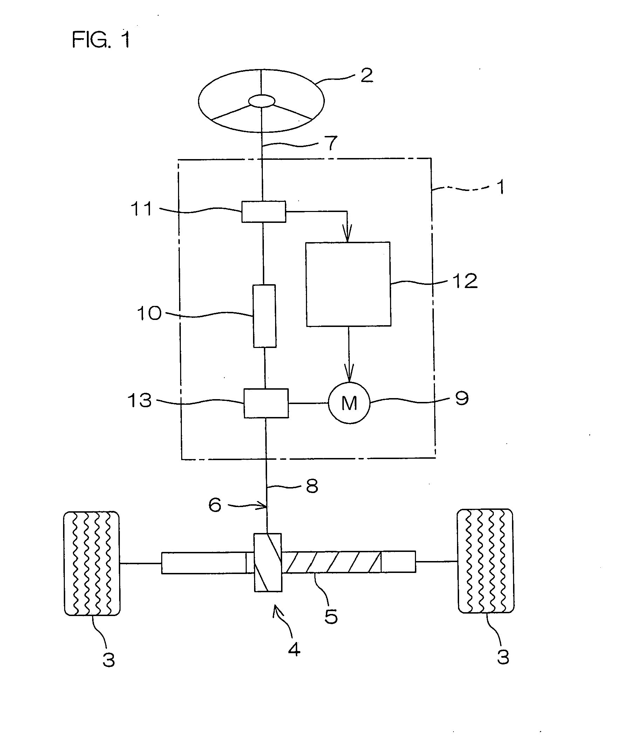

Fig. 1 is a block diagram showing an example of an embodiment of an electric power steering apparatus according to the present invention.

As illustrated, an electric power steering apparatus 1 in this example is incorporated into a steering mechanism 4 for steering steerable wheels 3,3 by a rotation of a steering wheel 2 serving as a steering member.

The steering mechanism 4 comprises the steering wheel 2, a steering device 5 for converting the rotation of the steering wheel 2 into the steering of the steerable wheels 3,3, and a steering shaft 6 for transmitting the rotation of the steering wheel 2 into the steering device 5. The steering shaft 6 comprises a steering shaft 7 on the input side coupled to the steering wheel 2 and a steering shaft 8 on the output side connected to the steering device 5.

The electric power steering apparatus 1 comprises an electric motor 9 for performing steering assist, a torsion bar 10 for connecting the steering shafts 7 and 8 on the input side and the output side, a steering angle sensor 11 provided on the steering shaft 7 on the input side for detecting the amount of change in the rotation position (steering angle displacement) of the steering wheel 2, a CUP 12 for rotating the electric motor 9 on the basis of the results of the detection by the steering angle sensor 11, and a reduction gear 13 provided on the steering shaft 8 on the output side for decelerating the rotation of the electric motor 9 as well as amplifying an output thereof and then applying the amplified output to the steering shaft 8.

In the electric power steering apparatus 1, when a driver operates the steering wheel 2, the amount of change in the rotation position is detected by the steering angle sensor 11 and is inputted to the CPU 12. The CPU 12 computes the rotation direction and the rotation speed of the electric motor 9 on the basis of data representing the amount of change in the rotation position inputted from the steering angle sensor 11 and the vehicle speed inputted from a vehicle speed sensor (not shown), and rotates the electric motor 9 on the basis of the results. Consequently, the rotation of the electric motor 9 is transmitted to the steering shaft 8 on the output side through the reduction gear 13, so that the steering of steerable wheels 3,3 by the rotation of the steering wheel 2 are torque-assisted.

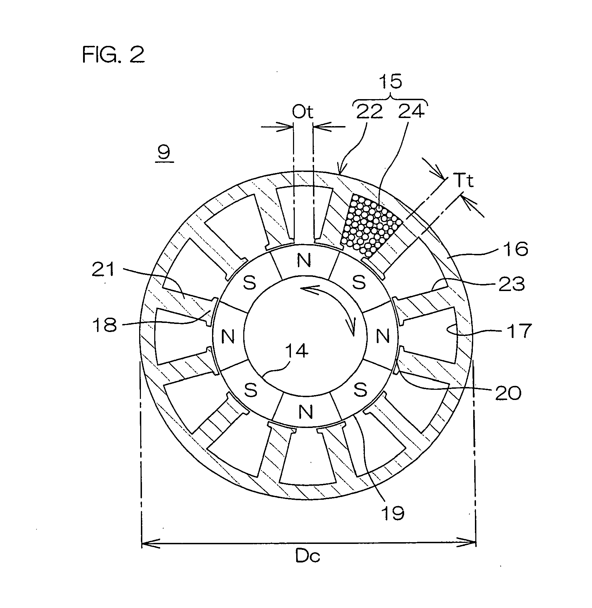

Fig. 2 is a cross sectional view showing an example of the electric motor 9 according to the present invention employed for the electric power steering apparatus 1.

As illustrated, the electric motor 9 in this example is a brushless motor comprising a rotor magnet 14 having respective four N and S poles of magnets alternately arranged therein in a shape of a cylinder and a stator 15 surrounding an outer periphery of the rotor magnet 14. In the electric motor 9, the stator 15 has a core 22 having a core body 16 in a shape of a cylinder arranged concentrically with the rotor magnet 14 and 12 stator cores 21 extended radially inward from an inner peripheral surface 17 of the core body 16 and radially disposed around the rotor magnet 14 such that front ends 18 thereof are opposed to an outer peripheral surface 19 of the rotor magnet 14 with a fine gap 20 provided therebetween integrally formed of a magnetic material, and a coil 24 with which gaps 23 between the stator cores 21 in the core 22 is filled.

Although in the illustrated example, only the one gap 23 between the stator cores 21 is filed with the coil 24, it goes without saying that in practice all the gaps 23 among the stator cores 21 are respectively filled with the coils 24.

In the illustrated example, the rotor magnet 14 is caused to produce a starting force, to start to rotate the electric motor 9 in an arbitrary direction when a predetermined control voltage pulse is applied to each of the coils 24 with which the gaps 23 among the stator cores 21 are respectively filled. Therefore, a total of eight poles comprising respective four N and S poles of magnets are arranged on the cylinder of the rotor magnet 14, and the 12 stator cores 21 are formed around the rotor magnet 14, as described above, to provide a phase difference in the circumferential direction between the magnetic pole of the rotor magnet 14 and the front ends 18 of each of the stator cores 21 in the core 22. However, the number of magnetic poles in the rotor magnet 14 and the number of stator cores 21 are not limited to those in the illustrated example.

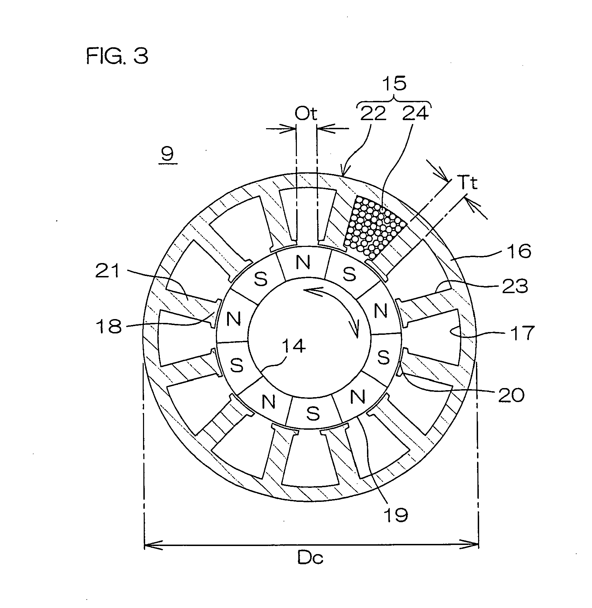

For example, Fig. 3 illustrates an electric motor 9 comprising a combination of a core 22 having 12 stator cores 21 that are the same as those employed in the example shown in Fig. 2 and a rotor magnet 14 having a total of 10 poles comprising respective five N and S poles alternately arranged therein in a shape of a cylinder. In this case, the rotation of the electric motor 9 can be also started in an arbitrary direction by causing the rotor magnet 14 to produce a starting force due to a phase difference between the core 22 and the rotor magnet 14 when a predetermined control voltage pulse is applied to each of coils 24 with which gaps 23 among the stator cores 21 are respectively filled.

In the present invention, used as a magnetic material forming the core 22 in the electric motor 9 comprising the above-mentioned components is a magnetic material in which a hysteresis loss Wh, which is measured under conditions of a frequency of 50 Hz and a magnetic flux density of 1.5 T, accounts for not more than 67 % of a whole of an iron loss W represented by a sum of the hysteresis loss Wh and an eddy current loss We. This makes it possible to significantly reduce the iron loss W in a range of the rotation speed in common use of the electric motor 9 in the electric power steering apparatus 1, whereby to reduce loss torque, raise torque, and prevent cogging torque from rising more greatly than ever before.

In the present invention, the effects can be further improved by using a magnetic material in which a proportion of the hysteresis loss Wh measured under above-mentioned conditions accounts for not more than 60 %. The lower limit value of the proportion of the hysteresis loss Wh is not particularly limited. This is because the lower the proportion of the hysteresis loss W to the whole iron loss W is, the more greatly the effects of reducing loss torque, raising torque, and preventing cogging torque from rising are improved. Consequently, the ideal lower limit value is 0 %. It is preferable to use a magnetic material that is as close to the lower limit value as possible.

As shown in Fig. 4, the larger the crystal grain diameter of the magnetic material is, the lower the hysteresis loss Wh tends to be. In order to adjust the hysteresis loss Wh in the magnetic material forming the core 22 in the above-mentioned range, therefore, the crystal grain diameter of a simplex metal or an alloy serving as the magnetic material may be adjusted.

The core 22 is configured by, for example, producing many thin plates composed of a magnetic material having a planar shape shown in Figs. 2 and 3 and stacking a plurality of thin plates so as to have a predetermined thickness. Therefore, the hysteresis loss Wh can be adjusted in the above-mentioned range by adjusting the heat treatment conditions of the thin plates composed of the magnetic material or changing the composition in the case of the alloy to change the crystal grain diameter thereof.

Examples of the thin plate composed of the magnetic material forming the core 22 include, but are not limited to, electromagnetic steel plates having various thicknesses in which a nominal iron loss defined in Japanese Industrial Standard (JIS) C 2552:2000 "Non-oriented magnetic steel sheet and strip" is not more than 3.00 W/kg out of various electromagnetic steel plates. Examples of the magnetic material usable in addition thereto include thin plates which are composed of various magnetic materials such as ferrite, permalloy, and amorphous and in which a hysteresis loss Wh accounts for not more than 67 % of the whole of an iron loss W.

Although the other characteristics of the magnetic material forming the core 22 are not particularly limited, it is preferable that the iron loss W is not more than 2.3 W/kg. The reason for this is as previously described. Considering that torque generated by the electric motor 9 is improved, it is preferable that the flux density B50 (a flux density in a magnetization force of 5000A/m) of the magnetic material is approximately 1.5 to 2 T.

Considering that the configuration of the present invention is employed to make the electric motor 9 as small as possible while making the loss torque as low as possible, improving the torque and preventing the cogging torque from being generated, it is preferable that an outer diameter Dc of the core body 16 shown in Figs. 2 and 3 is not more than ϕ80 mm, a teeth width Tt, which is a width in a direction perpendicular to a radial direction of the cylinder, of the stator cores 21 are not more than 8 mm, and an open slot Ot that is an opening width along the circumferential direction of the cylinder between front ends 18 of the adjacent stator cores 21 are not more than 0.8 mm.

This makes it possible to miniaturize the electric motor 9 whereby to miniaturize the whole of the electric power steering apparatus 1.

The configuration of the present invention is not limited to that in the illustrated examples, described above.

Although as the electric motor, for example, the brushless motor having the configurations shown in Figs. 2 and 3 is most effective in obtaining the effect of the present invention, the configuration of the brushless motor is not limited to those shown in Figs. 2 and 3. Further, as the electric motor, an electric motor in a form other than the brushless motor can be also employed. The configuration of the electric power steering apparatus itself is not limited to that shown in Fig. 1.

In either case, an electric power steering apparatus having an electric motor superior in the effects of reducing loss torque, improving torque, preventing cogging torque from rising and the like can be obtained by making adjustment such that the proportion of a hysteresis loss Wh, which is measured under conditions of a frequency of 50 Hz and a magnetic flux density of 1.5 T, in a magnetic material forming a core in the electric motor is not more than 67 %.

In addition thereto, various design changes can be made in a range in which the scope of the present invention is not changed.

### Examples

The present invention will be described on the basis of an example and comparative examples.

### Example 1:

An electromagnetic steel plate whose nominal number defined in the above-mentioned JIS Standard corresponds to 35A300 (thickness: 0.35 mm, nominal iron loss W: not more than 3.00 W/kg) and in which a hysteresis loss Wh, which was measured under conditions of a frequency of 50 Hz and a magnetic flux density of 1.5 T, is 1.29 W/ kg, an eddy current loss We is 0. 87 W/kg, an iron loss W is 2.16 W/kg, the hysteresis loss Wh accounts for 59.7 % of the whole iron loss W, and a magnetic flux density B50 is 1.75 T was punched into parts in a planar shape shown in Figs. 2 and 3, and a plurality of the obtained parts were stacked to fabricate a core having a thickness of 40 mm. An outer diameter Dc of a core body was set to ϕ70 mm, a teeth width Tt of a stator core was set to 4.5 mm, a number of stator cores was set to 12, and an open slot Ot between front ends of the adjacent stator cores was set to 0.5 mm.

### Comparative Example 1:

A core having the same shape and the same dimensions as that in the example 1 was fabricated in the same manner as that in the example 1 except that an electromagnetic steel plate whose nominal number corresponds to 35A300 (thickness: 0.35 mm, nominal iron loss W: not more than 3.00 W/kg) and in which a hysteresis loss Wh, which was measured under conditions of a frequency of 50 Hz and a magnetic flux density of 1.5 T, is 1.99 W/kg, an eddy current loss We is 0.45 W/kg, an iron loss W is 2.44 W/kg, the hysteresis loss Wh accounts for 81.6 % of the whole iron loss W, and a magnetic flux density B50 is 1.72 T was used.

### Comparative Example 2:

A core having the same shape and the same dimensions as that in the example 1 was fabricated in the same manner as that in the example 1 except that an electromagnetic steel plate whose nominal number corresponds to 35A300 (thickness: 0.35 mm, nominal iron loss W: not more than 3.00 W/kg) and in which a hysteresis loss Wh, which was measured under conditions of a frequency of 50 Hz and a magnetic flux density of 1.5 T, is 1.54 W/kg, an eddy current loss We is 0.75 W/kg, an iron loss W is 2.29 W/kg, the hysteresis loss Wh accounts for 67.2 % of the whole iron loss W, and a magnetic flux density B50 is 1.75 T was used.
Characteristic test:

Brushless motors having the configuration shown in Fig. 2 were fabricated using the cores fabricated in the foregoing example and comparative examples, and a torque meter and an external driving device were connected to a rotor magnet in the brushless motors to drive the external driving device at low speed, thereby to measure the static change in torque in a case where the rotor magnet is rotated once. A difference between a maximum value and a minimum value of the torque was found as cogging torque, and an average value between the maximum value and the minimum value was found as loss torque.

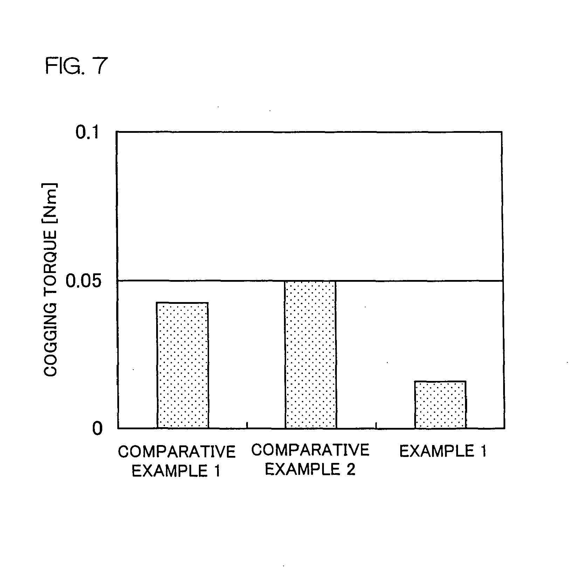

The results of measurement of the loss torque are shown in Fig. 6, and the results of measurement of the cogging torque are shown in Fig. 7.

From both the figures, it was confirmed that the loss torque could be reduced and the cogging torque could be prevented from rising in a range of the speed of rotation in common use of the electric motor for an electric power steering apparatus by setting the proportion of the hysteresis loss Wh in the whole iron loss W in the magnetic material forming the core to not more than 67 % and particularly not more than 60 %.

## Claims

1. An electric motor **characterized by** comprising a rotor and a stator, one of the rotor and the stator comprising a coil and a core, and the core is formed of a magnetic material in which a hysteresis loss Wh, which is measured under conditions of a frequency of 50 Hz and a magnetic flux density of 1.5 T, accounts for not more than 67 % of a whole of an iron loss W represented by a sum of the hysteresis loss Wh and an eddy current loss We.

2. The electric motor according to claim 1, wherein the core is formed of a magnetic material in which a hysteresis loss Wh, which is measured under conditions of a frequency of 50 Hz and a magnetic flux density of 1.5 T, accounts for not more than 60 % of the whole of an iron loss W.

3. The electric motor according to claim 1, wherein the core is formed of a magnetic material in which an iron loss W is not more than 2.3 W/kg.

4. The electric motor according to claim 1, comprising a rotor magnet in a shape of a cylinder and the stator surrounding an outer periphery of the rotor magnet, the stator comprising the coil and the core integrally formed of the magnetic material, the core comprising a core body in a shape of a cylinder arranged concentrically with the rotor magnet and a plurality of stator cores extended radially inward from an inner peripheral surface of the core and radially disposed around the rotor magnet such that front ends thereof are opposed to an outer peripheral surface of the rotor magnet with a fine gap provided therebetween to form a space filled with the coil, an outer diameter of the core body is not more than ϕ80 mm, a teeth width that is a width, in a direction perpendicular to a radial direction of the cylinder, of the stator cores are not more than 8 mm, and an open slot width that is an opening width along a circumferential direction of the cylinder between front ends, which are opposed to the outer peripheral surface of the rotor magnet, of the adjacent stator cores are not more than 0.8 mm .

5. An electric power steering apparatus **characterized by** comprising the electric motor according to claim 1 as an electric motor for performing steering assist by rotating in response to an input from a steering member.
